# EUROPÄISCHE PATENTANMELDUNG

(11) **EP 4 201 787 A1**
(43) Veröffentlichungstag der Anmeldung: **28.06.2023**
(21) Anmeldenummer: 22213720.0
(22) Anmeldetag: 15.12.2022
(51) Int. Cl.: B62D 1/181, B62D 1/189

(54) **LENKSYSTEM FÜR EIN KRAFTFAHRZEUG**

(30) Priorität: 21.12.2021 DE 102021214797
(71) Anmelder: thyssenkrupp Presta Aktiengesellschaft, 9492 Eschen (LI); thyssenkrupp AG, 45143 Essen (DE)
(72) Erfinder: Huber, Sebastian, 6811 Göfis (AT); Bayer, Tim, 9450 Lüchingen (CH)
(74) Vertreter: thyssenkrupp Intellectual Property GmbH

(57) **Zusammenfassung**

Die vorliegende Erfindung betrifft eine Lenksäule (1) für ein Kraftfahrzeug, umfassend mindestens zwei Bauteile (31, 32, 33), die in einer durch eine Längsachse (L) definierten Längsrichtung relativ zueinander teleskopartig verstellbar sind, wobei ein motorischer Verstellantrieb (6) zur relativen Verstellung mit den Bauteilen (31, 32, 33) wirkverbunden ist. Um einen einfacheren Aufbau bei geringerem Bauraumbedarf und Gewicht zu ermöglichen, schlägt die Erfindung vor, dass der Verstellantrieb (6) ein an einem der Bauteile (32) um eine quer zur Längsachse (L) liegende Antriebsachse (V) drehbar gelagertes Antriebsrad (66) aufweist, welches an mindestens an dem anderen Bauteil (31, 33) in Längsrichtung abwälzbar angreift, wobei das Antriebsrad (66) um die Antriebsachse (V) motorisch antreibbar ist, zur Erzeugung einer zwischen den Bauteilen (31, 32, 33) in Längsrichtung wirkenden linearen Verstell kraft.

## Beschreibung

### Stand der Technik

Die Erfindung betrifft eine Lenksäule für ein Kraftfahrzeug, umfassend mindestens zwei Bauteile, die in einer durch eine Längsachse definierten Längsrichtung relativ zueinander teleskopartig verstellbar sind, wobei ein motorischer Verstellantrieb zur relativen Verstellung mit den Bauteilen wirkverbunden ist.

Zur Anpassung einer Lenkeingabeeinrichtung an eine Fahrerposition ist eine gattungsgemäße Lenksäule dadurch längsverstellbar ausgestaltet, dass sie mindestens zwei Bauteile aufweist, die in einer durch eine Längsachse vorgegebenen Längsrichtung teleskopartig relativ zueinander verstellbar sind. In ausgefahrenem oder auseinander gezogenem Zustand kann eine bezüglich der Fahrtrichtung am hinteren oder oberen Bauteil angeordnete Lenkhandhabe, beispielsweise ein um die Längsachse drehbares Lenkrad, in einem Bedienbereich positioniert werden. Dadurch, dass die Bauteile eingefahren oder zusammengeschoben werden, bezüglich der Fahrtrichtung nach vorn, können sie zur Einstellung einer optimalen Bedienposition für einen manuellen Lenkeingriff verstellt werden. Werden die Bauteile so weit wie möglich nach vorn zusammengefahren, kann die Lenksäule verstaut werden. Diese Verstauposition kann beispielsweise im autonomen Fahrbetrieb eingestellt werden, so dass der Fahrzeuginnenraum für eine anderweitige Nutzung freigegeben werden kann.

Außerdem kann die längsverstellbaren Bauteile im Fall eines Crashs in Längsrichtung zusammengeschoben werden, wodurch wirksam verhindert wird, dass die Bauteile in das Innere der Fahrgastzelle eindringen und zu Verletzungen der Insassen führen könnten.

Es ist bekannt, dass die Lenksäule mindestens zwei Bauteile beispielsweise teleskopartig angeordnete Mantelrohre oder dergleichen aufweist, welche die Teleskopelemente einer Manteleinheit bilden. Die Manteleinheit ist von einer Trageinheit an der Fahrzeugkarosserie gehalten. Dadurch, dass die Manteleinheit optional relativ zur Trageinheit quer zur Längsrichtung in einer Höhenrichtung verstellbar ist, kann zusätzlich zur Längsverstellung eine Höhenverstellung zur Anpassung der Bedienposition und zum Verstauen ermöglicht werden.

Zur Längsverstellung ist es im Stand der Technik bekannt, einen motorischen Verstellantrieb mit einer Antriebseinheit vorzusehen, die an den Bauteilen, beispielsweise den Mantelrohren, angreift. Mittels eines elektrischen Motors kann über ein Getriebe eine Verstellkraft zur relativen Längsverstellung der Mantelrohre erzeugt werden.

Eine motorisch verstellbare Lenksäule der eingangs genannten Art, die drei durch einen motorischen Verstellantrieb relativ zueinander verstellbare Teleskopelemente aufweist, ist beispielsweise aus der EP 2 956 349 B1 bekannt. Der daraus bekannte Verstellantrieb weist zwei Spindeltriebe mit jeweils einer motorischen Antriebseinheit auf, die jeweils an zwei relativ zueinander verstellbaren Teleskopelementen angreifen. Nachteilig daran ist der aufwendige Aufbau des Verstellantriebs und der relativ große Bauraumbedarf und das hohe Gewicht.

Angesichts der vorangehend erläuterten Problematik ist es eine Aufgabe der vorliegenden Erfindung, einen einfacheren Aufbau bei geringerem Bauraumbedarf und Gewicht zu ermöglichen.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeug, umfassend mindestens zwei Bauteile, die in einer durch eine Längsachse definierten Längsrichtung relativ zueinander teleskopartig verstellbar sind, wobei ein motorischer Verstellantrieb zur relativen Verstellung mit den Bauteilen wirkverbunden ist, ist erfindungsgemäß vorgesehen, dass der Verstellantrieb ein an einem der Bauteile um eine quer zur Längsachse liegende Antriebsachse drehbar gelagertes Antriebsrad aufweist, welches an mindestens an dem anderen Bauteil in Längsrichtung abwälzbar angreift, wobei das Antriebsrad um die Antriebsachse motorisch antreibbar ist, zur Erzeugung einer zwischen den Bauteilen in Längsrichtung wirkenden linearen Verstellkraft.

Bevorzugt wird eine Lenksäule für ein Kraftfahrzeug vorgeschlagen, umfassend mindestens drei Bauteile, die in einer durch eine Längsachse definierten Längsrichtung relativ zueinander teleskopartig verstellbar sind, wobei ein motorischer Verstellantrieb zur relativen Verstellung mit den Bauteilen wirkverbunden ist, bei der vorgesehen ist, dass der Verstellantrieb ein an einem der Bauteile um eine quer zur Längsachse liegende Antriebsachse drehbar gelagertes Antriebsrad aufweist, welches an mindestens an einem anderen Bauteil in Längsrichtung abwälzbar angreift, wobei das Antriebsrad um die Antriebsachse motorisch antreibbar ist, zur Erzeugung einer zwischen den Bauteilen in Längsrichtung wirkenden linearen Verstell kraft.

Erfindungsgemäß ist anstelle eines Spindeltriebs ein um seine Achse, dies ist die Antriebsachse, motorisch drehend antreibbares Antriebsrad vorgesehen. Das Antriebsrad ist an einem der Bauteile, beispielsweise einem Teleskopelement, um die Antriebsachse drehbar gelagert, und steht mit mindestens an einem anderen Bauteil in Wirkeingriff. Der Wirkeingriff wird dadurch gebildet, dass der Außenumfang des Antriebsrads kraftübertragend an dem anderen Bauteil angreift, und an diesem, bevorzugt schlupfarm oder schlupffrei, abgerollt oder abgewälzt werden kann. Dadurch wird ein Linearantrieb realisiert, bei dem durch drehenden Antrieb des Antriebrads mittels einer motorischen Antriebseinheit das andere Bauteil entsprechend dem abgerollten Umfang in Längsrichtung mitgenommen wird. Dabei wird das Antriebsmoment des Antriebsrads in eine lineare Antriebskraft umgesetzt, die als Verstellkraft zwischen den Bauteilen wirkt. Mit anderen Worten wird die motorisch angetriebene Rotation des Antriebsrads umgesetzt in eine längsrichtete Translation, also eine Linearbewegung der Bauteile relativ zueinander.

Dadurch, dass das Antriebsrad drehend gelagert in dem einen Bauteil integriert ist und direkt, in direktem getriebemäßigem Wirkeingriff, an dem anderen Bauteil angreift, kann eine vorteilhafte, bauraumsparende und leichte Bauweise realisiert werden. Der Aufwand und Bauraumbedarf ist insbesondere geringer als bei den im Stand der Technik bekannten Spindeltrieben, bei denen eine Gewindespindel und eine Spindelmutter außerhalb der Bauteile angeordnet sind.

Vorzugsweise kann vorgesehen sein, dass das Antriebsrad mit einer Antriebswelle gekuppelt ist. Der Verstellantrieb weist eine Antriebseinheit mit einem elektrischen Motor auf, der sein Antriebsmoment erfindungsgemäß über eine Antriebswelle auf das Antriebsrad überträgt. Die Antriebswelle kann durch eine Getriebewelle eines Getriebes gebildet sein, beispielsweise als Ausgangswelle eines an der Motorwelle des Motors angeschlossenen Untersetzungsgetriebes. Das Getriebe kann als Zahnrad-, Riemen-, Zahnriemen- oder sonstiges Getriebe ausgebildet sein, um das Antriebsmoment optimal auf das Antriebsrad übertragen zu können. Dabei kann auch eine Anpassung an die baulichen Gegebenheiten erfolgen. Alternativ kann ein Direktantrieb realisiert sein, bei dem die Antriebswelle direkt an die Motorwelle gekuppelt ist.

Die Antriebswelle kann bevorzugt über eine drehschlüssige, drehmomentübertragende Verbindung zur Einleitung eines Antriebsmoments mit dem Antriebsrad gekuppelt sein. Beispielsweise kann das Antriebsrad direkt drehfest auf der Antriebswelle angeordnet sein.

Es ist vorteilhaft, dass das Antriebsrad mindestens ein Übertragungsmittel aufweist. Ein Übertragungsmittel kann ein Getriebeelement eingesetzt werden, welches ausgebildet ist, die außen in Umfangsrichtung wirkende Antriebskraft, die sich aus dem in das Antriebsrad eingeleiteten Antriebsmoment und dem Durchmesser des Antriebsrads ergibt, in Längsrichtung auf das andere Bauteil zu übertragen. Ein Übertragungsmittel kann eine Riemenscheibe, ein Reibrad, ein Zahnrad oder Kettenrad oder dergleichen umfassen, welches an dem Antriebsrad - vorzugsweise integriert - ausgebildet sein kann, oder mit diesem verbunden ist. Das Übertragungsmittel greift in Längsrichtung kraft- und/oder formschlüssig in ein korrespondierend ausgebildetes Getriebemittel des Bauteils ein, zur Umsetzung der Rotation des Antriebsrads in eine Translation eines mit dem Antriebsrad in abwälzendem Eingriff stehenden Bauteils. Beispielsweise kann das Antriebsrads als Zahnrad mit einer außen umlaufenden Verzahnung ausgebildet sein, das in Verzahnungseingriff mit einer korrespondierenden, in Längsrichtung erstreckten Zahnstange an dem Bauteil steht. Der Vorteil dabei ist eine definierter, schlupffreier Linearantrieb. Alternativ kann eine kraftschlüssige Übertragung dadurch realisiert sein, dass das Antriebsrad als Reibrad ausgebildet ist mi einer außen umlaufenden Reibungsfläche, die kraftschlüssig mit einer korrespondierenden Reibungs-Laufbahn an dem zu verstellenden Bauteil zusammenwirkt. Vorteilhaft ist in jedem Fall der einfache, zuverlässige und kompakte Aufbau des Linearantriebs.

Das Antriebsrad kann auch verschiedene Übertragungs- und/oder Getriebemittel aufweisen, die jeweils Getriebeeingriff mit jeweils einem anderen Bauteil stehen. Beispielsweise können Zahnräder mit unterschiedlichen Durchmessern vorgesehen sein, welche für einen gegebenen Drehwinkel des Antriebsrads unterschiedliche für eine gegebene Drehung des Antriebsrads lineare Verlagerungen der damit zusammenwirkenden Bauteile bewirken.

Weiterhin kann das Antriebsrad Getriebemittel zur Ankopplung an eine Antriebseinheit aufweisen, die mit Vorteil integriert ausgebildet sein können. Diese können beispielsweise eine Verzahnung, eine Riemen- oder Zahnriemenscheibe oder dergleichen umfassen, die antriebsmäßig mit dem Motor verbunden ist.

Bevorzugt sind mindestens drei Bauteile (31, 32, 33) vorgesehen, wobei die drei Bauteile mindestens ein erstes Bauteil, ein zweites Bauteil und ein drittes Bauteil umfassen können. Das erste Bauteil, in dem das Antriebsrad gelagert sein kann, kann in einer Ausführung axial bezüglich der Längsachse, d.h. in Längsrichtung verlagerbar in einem zweiten Bauteil angeordnet sein. Zusätzlich oder alternativ kann ein drittes Bauteil längs verlagerbar in dem ersten Bauteil angeordnet sein. In einer alternativen Ausführung kann das zweite Bauteil axial verlagerbar in dem ersten Bauteil, und das dritte Bauteil in dem zweiten Bauteil angeordnet sein. Die erfindungsgemäß Integration des Reibrads ermöglicht in jedem Fall eine konstruktiv einfache, klein bauende und leichte Konstruktion.

Vorzugsweise ist vorgesehen, dass die Bauteile Teleskopelemente einer Manteleinheit umfassen. Teleskopelemente können als erste, zweite und dritte Bauteile teleskopierbare, in Längsrichtung geschachtelt angeordnete Mantelrohre umfassen, oder Mantelrohre und dazwischen teleskopierbar angeordnete Zwischenelemente, beispielsweise zwischen den Mantelrohren angeordnete Wälzkörperkäfige, Gleitbüchsen oder dergleichen. Ein erfindungsgemäßes Antriebsrad kann an einem der Teleskopelemente gelagert sein und ist mittels einer motorischen, bevorzugt elektrischen Antriebseinheit drehend antreibbar, um die Teleskopelemente in Längsrichtung teleskopierend relativ zueinander zu verstellen. Dadurch kann ein vorteilhaft kompakter Aufbau einer Manteleinheit und entsprechend einer Lenksäule realisiert werden.

Es kann vorgesehen sein, dass in der Manteleinheit eine Lenkspindel um die Längsachse drehbar gelagert ist. Am hinteren Ende der Lenkspindel kann als manuelle Lenkhandhabe ein Lenkrad angebracht sein. Die Lenkspindel kann mit einer Lenkwelle verbunden sein, die über ein Lenkgetriebe eine mechanische Verbindung mit zu lenkenden Räder des Kraftfahrzeugs aufweist. Alternativ kann in einem Steer-by-Wire-Lenksystem vorgesehen sein, dass die Lenkspindel mit Drehsensoren oder anderen Eingabemitteln zusammenwirkt, welche einen manuell eingegebenen Lenkbefehl in ein elektrisches Steuersignal umsetzen, welches zur Ansteuerung von elektrischen Lenkaktuatoren dient, die einen entsprechenden Lenkeinschlag der Räder einstellen. Vorteilhaft ist in jedem Fall der einfache und kompakte Aufbau.

Eine vorteilhafte Bauform kann vorsehen, dass das Antriebsrad an einem Bauteil drehbar gelagert ist, und mit mindestens zwei anderen Bauteilen in Wirkeingriff steht. Das Antriebsrad kann in der vorangehend beschriebenen Weise motorisch drehend antreibbar beispielsweise an einem ersten Bauteil einer Manteleinheit angeordnet sein, beispielsweise an einem ersten Mantelrohr oder an einem Wälzkörperkäfig. Dieses erste Bauteil kann bevorzugt als Zwischenbauteil ausgebildet sein, welches in Längsrichtung verstellbar, koaxial teleskopierbar zwischen einem zweiten und einem dritten Bauteil angeordnet ist. Beispielsweise können das zweite und dritte Bauteil ein in dem ersten Mantelrohr angeordnetes inneres oder Innenmantelrohr umfassen, und ein das erste Bauteil koaxial aufnehmendes äußeres oder Außenmantelrohr. Dabei kann das Antriebsrad mit seinem Außenumfang derart radial über das erste Bauteil vorstehen, dass es nach außen mit dem Außenmantelrohr in Wirkeingriff kommt, und gleichzeitig nach innen mit dem Innenmantelrohr in Wirkeingriff kommt. Beispielsweise kann das Antriebsrad ein Zahnrad oder Reibrad aufweisen, welches formschlüssig in korrespondierende Zahnstangen an den beiden anderen Bauteilen eingreift, oder entsprechende Reibungs-Laufbahnen kraftschlüssig kontaktiert. Dadurch kann der Vorteil realisiert werden, dass durch einen erfindungsgemäßen Verstellantrieb mit einem einzigen rotierend angetriebenen Antriebsrad eine definierte Längsverstellung von drei teleskopierend verstellbaren Bauteilen ermöglicht ist, beispielsweise von drei Mantelrohren einer Manteleinheit. Dadurch kann in vorteilhafter Weise der Fertigungsaufwand, der Bauraumbedarf und das Gewicht verglichen mit dem eingangs genannten Stand der Technik reduziert werden.

Es kann weiterhin vorteilhaft sein, dass zwischen mindestens zwei Bauteilen eine Synchronisationseinrichtung angeordnet ist zur Zwangskopplung der Relativbewegung mindestens eines dritten Bauteils in Längsrichtung. Die mindestens zwei Bauteile sind mittels eines erfindungsgemäßen Antriebsrads relativ zueinander verstellbar. Die Synchronisationseinrichtung erzeugt eine mechanisch mit der Bewegung der beiden angetriebenen Bauteile zwangsgekoppelte Bewegung mindestens eines weiteren verstellbaren Bauteils, welches nicht direkt antriebsmäßig mit dem Antriebsrad wirkverbunden ist. Dabei können auch mehrere weitere Bauteile mit der Synchronisationseinrichtung gekoppelt sein. Es können beispielsweise zwei angetriebene Mantelrohre relativ zueinander durch das Antriebsrad verstellbar sein, und mindestens ein weiteres Bauteil, wie beispielsweise ein drittes Mantelrohr, ein Wälzkörperkäfig oder dergleichen, mit den zwei angetriebenen Mantelrohren über die Synchronisationseinrichtung zwangsgekoppelt sein. Diese setzt die lineare Relativbewegung der zwei Bauteile in eine damit synchronisierte Positionierung des dritten Bauteils oder weiterer Bauteile um. Dadurch kann der Vorteil realisiert werden, dass beispielsweise das Antriebsrad an einem in Längsrichtung beim Verstellen raumfesten Bauteil angebracht ist, beispielsweise einem Außenmantelrohr einer Lenksäule, und zwei oder mehr relativ dazu verstellbare Teleskopelemente bezüglich der Längsverstellung definiert angekoppelt sind. Auf diese Weise können die vorangehend genannten vorteilhaften Eigenschaften flexibel an unterschiedlich aufgebauten Teleskopanordnungen realisiert werden, die insbesondere auch mehr als drei Teleskopelement aufweisen können.

Die Synchronisationseinrichtung kann ein Synchronrad aufweisen. Ein Synchronrad kann beispielsweise ein Zahnrad oder ein Reibrad umfassen, welches an einem Bauteil gelagert und mit zwei weiteren Bauteilen abwälzend in Getriebeeingriff steht. Dadurch ist die relative Positionierung der drei Bauteile in jedem Verstellzustand eindeutig bestimmt, und eine relative Verstellung von zwei Bauteilen wird durch die lineare Kopplung über das Synchronrad zwangsweise in eine Verstellung des dritten Bauteils umgesetzt. Eine derartige Synchronisationseinrichtung kann konstruktiv einfach, zuverlässig und kompakt realisiert werden.

Alternativ oder zusätzlich kann die Synchronisationseinrichtung lineare Führungsmittel aufweisen. Dabei sind mindestens drei Bauteile über zusammenwirkende Führungselemente wie beispielsweise lineare Führungsbahnen oder -schienen und daran entlang geführte Führungskörper oder dergleichen zwangsweise miteinander gekoppelt, die nur eindeutig definierte Verstellzustände zulassen. Wird die relative Positionierung von zwei Bauteilen beeim Verstellen verändert, wird über die Führungsmittel eine Verstellkraft auf das dritte Bauteil, oder damit gekoppelte weitere Bauteile ausgeübt, so dass dieses relativ zu den beiden angetriebenen Bauteilen definiert positioniert wird.

Es ist mit Vorteil möglich, dass eine Antriebseinheit an einem der Bauteile angebracht ist. Eine Antriebseinheit weist einen elektrischen Motor auf, und kann bevorzugt ein daran gekuppeltes Getriebe umfassen. Die Antriebseinheit kann beispielsweise in Längsrichtung fix an einem Mantelrohr montiert sein, in dem ein drehend antreibbares Antriebsrad gelagert ist. Dabei ist es vorteilhaft, dass die Antriebseinheit an einem beim Verstellen in Längsrichtung feststehenden Bauteil angebracht ist, beispielsweise einem von einer Trageinheit gehaltenen Außenmantelrohr einer Manteleinheit. Dadurch können die beim Verstellen bewegten Massen in vorteilhafter Weise möglichst gering gehalten werden. Es ist alternativ auch möglich, dass die Antriebseinheit an einem Bauteil angebracht ist, und ein an einem anderen Bauteil gelagertes Antriebsrad antreibt.

Zur Übertragung des Antriebsmoments von der Antriebseinheit auf das Antriebsrad können geeignete Getriebemittel vorgesehen sein, beispielsweise Riemen, Zahnriemen, Ketten, Getrieberäder oder dergleichen.

In einer vorteilhaften Weiterbildung ist es möglich, dass ein Positionssensor zur Erfassung der Position der Bauteile vorgesehen ist kann vorgesehen sein, dass ein Positionssensor mit den Bauteilen zusammenwirkt. Ein derartiger Positionssensor kann die tatsächlichen aktuellen Verstellpositionen der verstellbaren Bauteile messtechnisch erfassen, beispielsweise durch an sich bekannte optische oder elektronische Messverfahren, und entsprechende Positionssignale ausgeben. Dies ermöglich eine automatisierte Überwachung und Positionsregelung des Verstellzustands, beispielsweise, ob eine vorgewählte Positionierung auch tatsächlich erreicht worden ist. Auf diese Weise können mit geringem Aufwand Fehlpositionierungen, die beispielsweise durch Schlupf eines als Reibrad ausgebildeten Antriebsrads auftreten können, erkannt und durch Nachstellen beseitigt werden. In weiterer Vorteil ist, dass ein weniger präziser oder leichter dimensionierter Antrieb vorgesehen werden kann, wobei durch eine über den Positionssensor rückgekoppelte Positionsregelung jederzeit eine reproduzierbare und genaue Verstellung ermöglicht wird.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einer weiteren perspektivischen Ansicht,
- Figur 3: einen Querschnitt A-A durch die Lenksäule gemäß Figur 1 oder 2,
- Figur 4: einen vergrößerten Ausschnitt aus Figur 3,
- Figur 5: eine erfindungsgemäße Lenksäule in einer zweiten Ausführungsform in einer schematischen perspektivischen Ansicht ähnlich Figur 2,
- Figur 6: eine vergrößerte Detailansicht von Figur 5,
- Figur 7: einen Querschnitt B-B durch die Lenksäule gemäß Figur 5,
- Figur 8a - e: eine Lenksäule in einer dritten Ausführungsform in schematischen teilweise aufgeschnittenen Ansichten.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

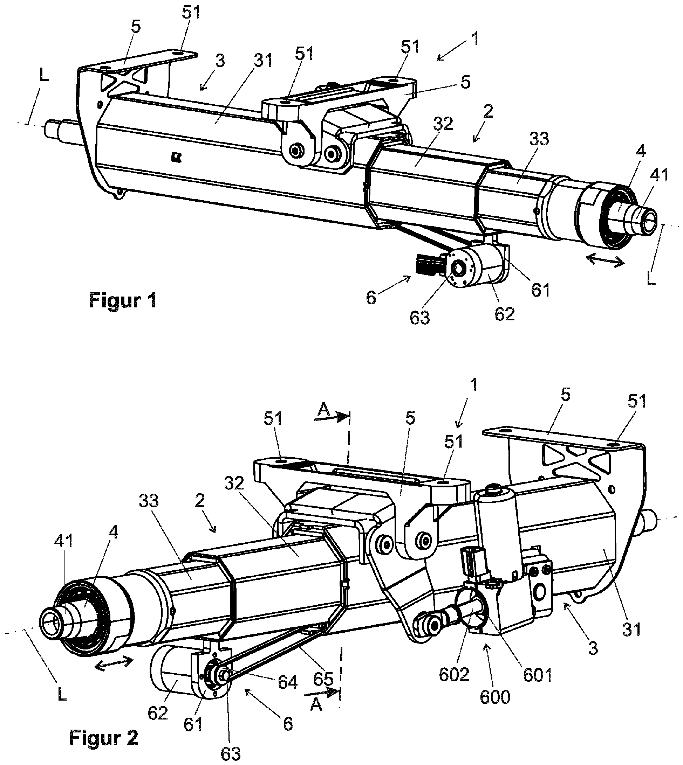

Figur 1 zeigt eine erfindungsgemäße Lenksäule 1 in einer Ansicht bezüglich der Fahrtrichtung von schräg hinten, die eine Stelleinheit 2 aufweist. Die Stelleinheit 2 umfasst eine Manteleinheit 3, die ein Außenmantelrohr 31, ein Zwischenmantelrohr 32 und ein Innenmantelrohr 33 aufweist, die in Ihrer Gesamtheit als Mantelrohre 31, 32, und 33 bezeichnet werden, und die verstellbare Bauteile im Sinne der Erfindung darstellen. Diese sind in Längsrichtung, die der Achsrichtung einer Längsachse L entspricht, teleskopierend verschiebbar, koaxial ineinander angeordnet, wie mit dem Doppelpfeil angedeutet.

In der Manteleinheit 3 ist um die Längsachse L drehbar eine Lenkspindel 4 gelagert, die an ihrem hinteren Ende einen Anschlussabschnitt 41 zur Anbringung eines nicht dargestellten Lenkrads aufweist.

In Figur 1 ist eine Verstellposition der Lenksäule 1 in einer Bedienstellung gezeigt, bei der das Zwischenmantelrohr 32 und das Innenmantelrohr 33 in Längsrichtung nach hinten bezogen auf die Fahrtrichtung des Kraftfahrzeugs - in der Zeichnung nach rechts - zumindest teilweise aus dem Außenmantelrohr 31 herausgefahren sind, so dass sich ein an dem Anschlussabschnitt 41 angebrachtes Lenkrad im Bedienbereich zur Eingabe von Lenkbefehlen befindet. Figur 2 zeigt denselben Verstellzustand, wobei durch die unterschiedliche Perspektive das Innenmantelrohr nach links herausgezogen ist.

Die Manteleinheit 3 ist in einer zweiteiligen Trageinheit 5 gehalten, welche Befestigungsmittel 51 in Form von Öffnungen zur Anbringung an einer nicht dargestellten Fahrzeugkarosserie aufweist.

Ein erfindungsgemäßer Verstellantrieb 6 weist eine Antriebseinheit 61 mit einem elektrischen Motor 62 auf, dessen Motorwelle 63 quer zur Längsachse L liegt. Auf der Motorwelle 63 ist ein Riemenrad 64 angebracht, um das als Zugmittel ein Riemen 65 umläuft, der als Flach-, Keil- oder Zahnriemen ausgebildet sein kann.

Der Verstellantrieb 6 ist an dem Zwischenmantelrohr 32 angebracht.

Figur 2 zeigt einen Querschnitt A-A quer zur Längsachse L durch die Lenksäule 1 gemäß Figur 2.

In dem Zwischenmantelrohr 32 ist ein erfindungsgemäßes Antriebsrad 66 um eine quer zur Längsachse L liegende Antriebsachse V drehbar gelagert. Mit einer an seinem Außenumfang umlaufenden Reibungsfläche 67, die ein Übertragungsmittel im Sinne der Erfindung darstellt und alternativ auch einem Zahnkranz 67 aufweisen kann, steht das Antriebsrad 66 mit dem Außenmantelrohr 31 und dem Innenmantelrohr 33 in Wirkeingriff. Dieser wird dadurch erzeugt, dass die Reibungsfläche 67 (oder der Zahnkranz) an korrespondierenden Reibungsflächen 311 und 331 am Außenmantelrohr 31 und am Innenmantelrohr 33 kraftschlüssig abwälzbar angreift. Falls anstelle der Reibungsfläche 67 ein Zahnkranz vorgesehen ist, sind anstelle der Reibungsflächen 311 und 331 korrespondierende Zahnstangen vorgesehen, in die der Zahnkranz getriebemäßig eingreift.

Mit dem Antriebsrad 66 ist ein Riemenrad 67 drehschlüssig verbunden, beispielsweise wie im gezeigten Beispiel einstückig ausgebildet. In jedem Fall wird dadurch ein Linearantrieb realisiert, der eine Drehung des Antriebsrads 66 in eine lineare relative Bewegung der Mantelrohre 31, 32, 33 umsetzt.

Das Riemenrad 67 ist Bestandteil eines Riementriebes, bei dem der von den Motor 62 angetriebene Zugriemen 65 als Zugmittel um die Riemenräder 64 und 68 antriebsmäßig umläuft.

Durch dem Motor 62 der Antriebseinheit 61 kann das Antriebsrad 66 über den Riementrieb um die Antriebsachse V rotierend angetrieben werden. Dabei wird der außen am Antriebsrad 66 umlaufende Reibungsfläche 67 oder der Zahnkranz an den korrespondierenden Reibungsflächen 311 und 331, oder den Zahnstangen, abgewälzt, wodurch die Mantelrohre 31 und 33 je nach Drehrichtung des Antriebsrads relativ zu dem das Antriebsrad 66 lagernden Zwischenmantelrohr 32 auseinandergefahren, so dass die Lenksäule 1 ausgefahren wird, und bei umgekehrter Drehrichtung entsprechend zusammen gefahren.

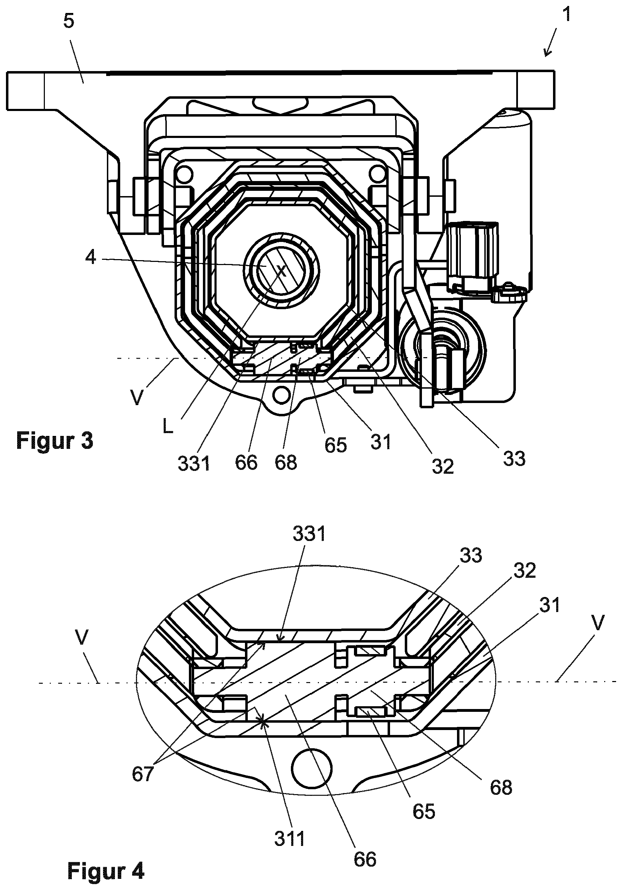

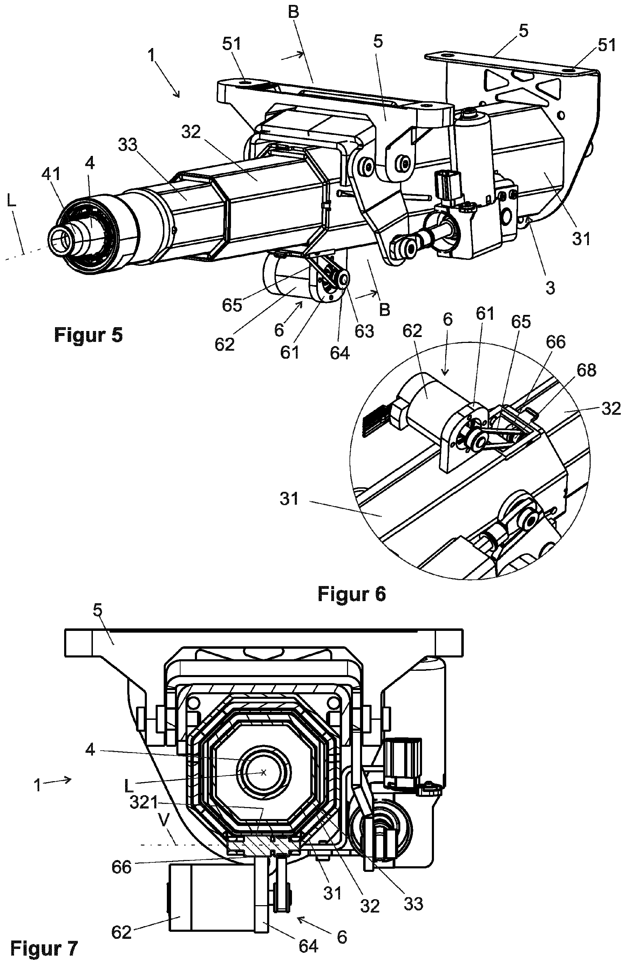

In den Figuren 5, 6 und 7 ist eine zweite Ausführungsform einer erfindungsgemäßen Lenksäule 1 gezeigt, wobei die Ansicht in Figur 5 der Ansicht von Figur 2 entspricht, und Figur 7 einen Querschnitt B-B aus Figur 5 zeigt. In Figur 6 ist der Verstellantrieb 6 in einer vergrößerten Detailansicht von unten gesehen dargestellt. Für gleichwirkende Bauteile werden dieselben Bezugszeichen wie in den Figuren 1 bis 4 verwendet.

Im Unterschied zur ersten Ausführung ist das Antriebsrad 66 in dem Außenmantelrohr 31 gelagert, an dem ebenfalls die Antriebseinheit 61 befestigt ist.

Das Antriebsrad 66 steht in Wirkeingriff mit einer Reibungsfläche 321 die außen am Zwischenmantelrohr 32 angeordnet und ausgebildet ist, analog zur Reibungsfläche 331 am Innenmantelrohr 33 der ersten Ausführung, wie oben beschrieben. Die Reibungsfläche 321 kann ebenfalls eine Zahnstange umfassen.

Durch drehenden Antrieb des Antriebsrads 66 kann eine lineare Relativbewegung zwischen dem Außenmantelrohr 31 und dem Zwischenmantelrohr 32 erzeugt werden, analog zu der oben beschriebenen Funktionsweise der ersten Ausführung.

Um die durch das Antriebsrad 66angetriebene relative Bewegung von Außenmantelrohr 31 und Zwischenmantelrohr 32 auf das Innenmantelrohr 31 zu übertragen, ist eine Synchronisationseinrichtung 8 vorgesehen, die gleichbedeutend auch als Positioniereinrichtung 8 bezeichnet wird.

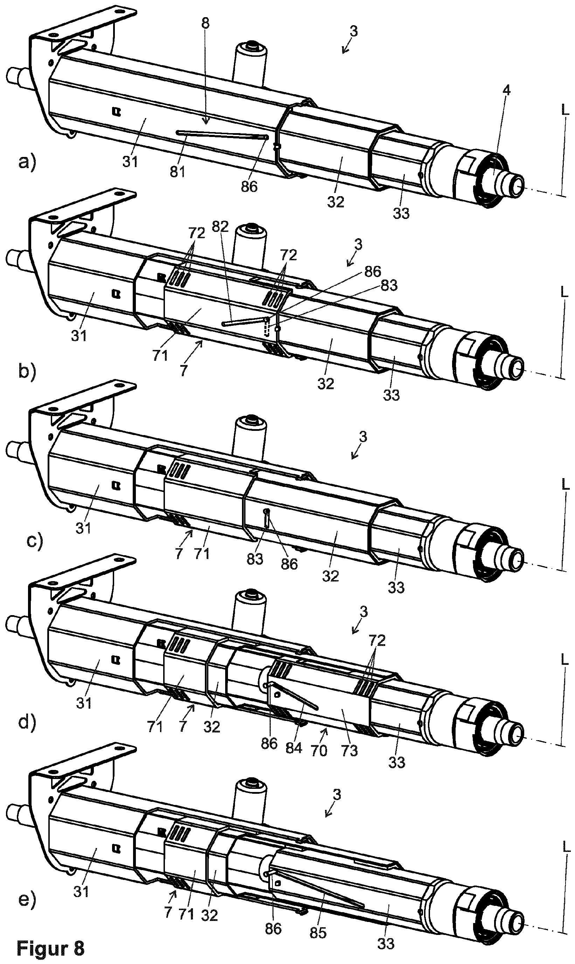

In Figur 8 ist die Manteleinheit 3 zur besseren Übersicht einzeln dargestellt, in der Perspektive und dem Verstellzustand gemäß Figur 1. In den einzelnen Teilfiguren 8a, b, c, d und e sind einzelne Teilabschnitte der Mantelrohre 31, 32, 33 aufgeschnitten und weggelassen und geben einen jeweils weiteren Blick ins Innere der Manteleinheit 3 frei.

In Figur 8b ist das Außenmantelrohr 31 teilweise weggelassen. Darin ist erkennbar, dass koaxial zwischen den Mantelrohren 31 und 32 eine Wälzlagereinheit 7 angeordnet ist, die relativ dazu teleskopierend in Längsrichtung verlagerbar ist und ein Zwischenelement darstellt. Die Wälzlagereinheit 7 weist einen hülsenförmigen Wälzkörperkäfig 71 auf, der im gezeigten Beispiel als Rollenkäfig ausgebildet ist, in dem als Wälzkörper jeweils eine Mehrzahl von Rollen 72 jeweils in zur Längsachse L achsparallelen Reihen positioniert, drehbar gehalten sind. Die Rollen 72 rollen außen auf dem Außenmantelrohr 31, also auf einer Innenfläche des Außenmantelrohrs 31, und innen auf dem Zwischenmantelrohr 32, also auf einer Außenfläche des Zwischenmantelrohrs 32, ab, so dass zwischen den Mantelrohren 31 und 32 eine lineare Wälzlagerung in Längsrichtung gebildet ist.

In Figur 8c ist die Wälzlagereinheit 7 teilweise aufgeschnitten und weggelassen und gibt einen Blick frei auf die in Figur 8b von dem Wälzkörperkäfig 71 verdeckte Außenseite des Zwischenmantelrohrs 32 mit dem Führungsschlitz 83.

In Figur 8d ist das Zwischenmantelrohr 32 teilweise weggelassen. Darin ist erkennbar, dass koaxial zwischen den Zwischenmantelrohr 32 und dem Innenmantelrohr 33 eine zweite Wälzlagereinheit 70 angeordnet ist, die im Prinzip wie die Wälzlagereinheit 7 ausgestaltet ist und ein relativ zu den Mantelrohren 32 und 33 teleskopierend in Längsrichtung verlagerbares Zwischenelement im Sinne der Erfindung darstellt. Die Wälzlagereinheit 70 weist einen hülsenförmigen Wälzkörperkäfig 73 auf, in dem als Wälzkörper jeweils eine Mehrzahl von Rollen 72 jeweils in zur Längsachse L achsparallelen Reihen positioniert, drehbar gehalten sind.

Die Rollen 72 rollen außen auf dem Zwischenmantelrohr 32, also auf einer Innenfläche des Zwischenmantelrohrs 32, und innen auf dem Innenmantelrohr 33, also auf einer Außenfläche des Innenmantelrohrs 33, ab, so dass zwischen den Mantelrohren 32 und 33 eine lineare Wälzlagerung in Längsrichtung gebildet ist.

In Figur 8e ist die Wälzlagereinheit 70 teilweise weggelassen und gibt einen Blick frei auf die in Figur 8d von dem Wälzkörperkäfig 73 verdeckte Außenseite des Innenmantelrohrs 33.

Beim teleskopierenden Einfahren aus der in Figur 8a - 8e gezeigten Betriebsposition in die Verstauposition werden die Mantelrohre 31, 32, 33 und die Wälzkörperkäfige 71, 73 der Wälzlagereinheiten 7, 70 in Längsrichtung teleskopierend relativ zueinander bewegt, so dass diese auch zusammenfassend als Teleskopelemente 31, 32, 33, 7, 70 bezeichnet werden können, wobei das Zwischenmantelrohr 32 und die Wälzlagereinheit 7 und 70 Zwischenelemente im Sinne der Erfindung sind.

Eine Synchronisationseinrichtung 8 (Positioniereinrichtung 8) weist als langgestreckte Führungsbahnen radial bezüglich der Längsachse L offene, durchgehende Führungsschlitze 81, 82, 83, 84, 85 auf, wobei der Führungsschlitz 81 in dem Außenmantelrohr 31 angeordnet ist, der Führungsschlitz 82 in der Wälzkörperkäfig 71 der Wälzlagereinheit 7, der Führungsschlitz 83 in dem Zwischenmantelrohr 32, der Führungsschlitz 84 in der Wälzkörperkäfig 73 der Wälzlagereinheit 70, und der Führungsschlitz 85 in dem Innenmantelrohr 32. Ein Führungsstift 86 bildet einen Führungskörper, der sämtliche sich durch sämtliche Führungsschlitze 81, 82, 83, 84, 85 erstreckt, d.h. diese in radialer Richtung, quer zur Längsachse L durchsetzt. Dabei ist der Führungsstift 86 in Richtung der Längserstreckung in den Führungsschlitze 81, 82, 83, 84, 85 gleitend verschiebbar gelagert, und dabei radial in den Schlitzöffnungen gehalten und radial gesichert. Der Führungsstift 86 ist damit bezüglich jedem der Teleskopelemente 31, 32, 33, 7, 70 schwimmend gelagert.

Der Führungsschlitz 81 ist länger und flacher gegen die Längsachse L geneigt als der Führungsschlitz 82, der wiederum flacher geneigt ist als der denkrecht zur Längsachse L stehende Führungsschlitz 83 in dem Zwischenmantelrohr 32. Die Führungsschlitze 84 und 85 sind relativ zu den Führungsschlitzen 82 und 81 spiegelbildlich, mit umgekehrtem Vorzeichen der Neigung relativ zur Längsachse L angeordnet.

Sämtliche Führungsschlitze 81, 82, 83, 84, 85 schneiden bzw. überlappen sich in einem gemeinsamen Überlagerungsabschnitt, wo sie gemeinsam von dem Führungsstift 86 durchsetzt werden. Der Führungsstift 86 bildet mit jedem der Führungsschlitze 81, 82, 83, 84, 85 eine Kulissenführung. Diese Kulissenführungen sich durch den gemeinsamen Führungsstift 86 miteinander zwangsgekoppelt, d.h. der Führungsstift 86 kann sich nur gleichzeitig relativ zu sämtlichen Führungsschlitzen 81, 82, 83, 84, 85 bewegen.

Durch die Synchronisationseinrichtung 8 sind die Mantelrohre 31, 32, 33 und die Wälzlagereinheiten 7, 70 in Längsrichtung in jeder beim Verstellen durchlaufenen Verstellposition eindeutig relativ zueinander zwangspositioniert. Entsprechend wird eine synchronisierte lineare Bewegung erzeugt, wenn die Mantelrohre 31 und 32 durch den erfindungsgemäßen Verstellantrieb 8 mittels des erfindungsgemäßen Antriebrads 66 relativ zueinander bewegt werden.

Zur Höhenverstellung der Manteleinheit 3 relativ zur Trageinheit 5 in der Höhenrichtung H kann ein motorischer Verstellantrieb 600 vorgesehen sein, der im gezeigten Beispiel als Spindeltrieb ausgebildet sein kann. Dieser weist eine in eine Spindelmutter 601 und eine darin eingeschraubte Gewindespindel 602 auf, wobei die Spindelmutter 601 und die Gewindespindel 602 mittels eines elektrischen Motors drehend antreibbar ist. Dadurch, dass die Gewindespindel 602 an der Manteleinheit 3 abgestützt ist, und die Spindelmutter 601 an der Trageinheit 5, kann durch den Spindeltrieb die Höhenposition verstellt werden.

### Bezugszeichenliste

- 1: Lenksäule
- 2: Stelleinheit
- 3: Manteleinheit
- 31: Außenmantelrohr
- 311: Reibungsfläche (Zahnstange)
- 32: Zwischenmantelrohr
- 321: Reibungsfläche (Zahnstange)
- 33: Innenmantelrohr
- 331: Reibungsfläche (Zahnstange)
- 4: Lenkspindel
- 41: Anschlussabschnitt
- 5: Trageinheit
- 51: Befestigungsmittel
- 6: Verstellantrieb
- 61: Antriebseinheit
- 62: Motor
- 63: Motorwelle
- 64: Riemenrad
- 65: Riemen
- 66: Antriebsrad
- 67: Reibungsfläche (Zahnkranz)
- 68: Riemenrad
- 600: Verstellantrieb (Spindeltrieb)
- 601: Spindelmutter
- 602: Gewindespindel
- 7, 70: Wälzlagereinheit
- 71, 73: Wälzkörperkäfig
- 72: Rollen
- 8: Positioniereinrichtung
- 81: Führungsschlitz
- 82: Führungsschlitz
- 83: Führungsschlitz
- 84: Führungsschlitz
- 85: Führungsschlitz
- 86: Führungsstift
- 87: Führungsvorsprung
- 88: Führungsnut
- L: Längsachse
- V: Antriebsachse

## Patentansprüche

1. Lenksäule (1) für ein Kraftfahrzeug, umfassend mindestens zwei Bauteile (31, 32, 33), die in einer durch eine Längsachse (L) definierten Längsrichtung relativ zueinander teleskopartig verstellbar sind, wobei ein motorischer Verstellantrieb (6) zur relativen Verstellung mit den Bauteilen (31, 32, 33) wirkverbunden ist,
**dadurch gekennzeichnet,**
**dass** der Verstellantrieb (6) ein an einem der Bauteile (32) um eine quer zur Längsachse (L) liegende Antriebsachse (V) drehbar gelagertes Antriebsrad (66) aufweist, welches an mindestens an dem anderen Bauteil (31, 33) in Längsrichtung abwälzbar angreift, wobei das Antriebsrad (66) um die Antriebsachse (V) motorisch antreibbar ist, zur Erzeugung einer zwischen den Bauteilen (31, 32, 33) in Längsrichtung wirkenden linearen Verstellkraft.

2. Lenksäule nach Anspruch 1, **dadurch gekennzeichnet, dass** das Antriebsrad (66) mit einer Antriebswelle gekuppelt ist.

3. Lenksäule nach einem der vorangehenden Ansprüche, **dadurch gekennzeichnet, dass** das Antriebsrad mindestens ein Übertragungsmittel (67) aufweist.

4. Lenksäule nach einem der vorangehenden Ansprüche, **dadurch gekennzeichnet, dass** mindestens drei Bauteile (31, 32, 33) vorgesehen sind, wobei die drei Bauteile (31, 32, 33) mindestens ein erstes Bauteil (32), ein zweites Bauteil (31) und ein drittes Bauteil (33) umfassen.

5. Lenksäule nach einem der vorangehenden Ansprüche, **dadurch gekennzeichnet, dass** die Bauteile (31, 32, 33) Teleskopelemente (31, 32, 33, 71, 73) einer Manteleinheit (3) umfassen.

6. Lenksäule nach Anspruch 5, **dadurch gekennzeichnet, dass** in der Manteleinheit (3) eine Lenkspindel (4) um die Längsachse (L) drehbar gelagert ist.

7. Lenksäule nach einem der vorangehenden Ansprüche, **dadurch gekennzeichnet, dass** das Antriebsrad (66) an einem Bauteil (32) drehbar gelagert ist, und mit mindestens zwei anderen Bauteilen (31, 33) in Wirkeingriff steht.

8. Lenksäule nach einem der vorangehenden Ansprüche, **dadurch gekennzeichnet, dass** zwischen mindestens zwei Bauteilen (31, 32) eine Synchronisationseinrichtung (8) angeordnet ist zur Zwangskopplung der Relativbewegung mindestens eines dritten Bauteils (33) in Längsrichtung.

9. Lenksäule nach Anspruch 7, **dadurch gekennzeichnet, dass** die Synchronisationseinrichtung (8) ein Synchronrad aufweist.

10. Lenksäule nach einem der vorangehenden Ansprüche 7 bis 8, **dadurch gekennzeichnet, dass** die Synchronisationseinrichtung (8) lineare Führungsmittel (81, 82, 83, 84, 85, 86, 87, 88) aufweist.

11. Lenksäule nach einem der vorangehenden Ansprüche, **dadurch gekennzeichnet, dass** eine Antriebseinheit (61) an einem der Bauteile (31, 32) angebracht ist.

12. Lenksäule nach einem der vorangehenden Ansprüche, **dadurch gekennzeichnet, dass** ein Positionssensor zur Erfassung der Position der Bauteile (31, 32, 33) vorgesehen ist.
